# EUROPEAN PATENT APPLICATION

(11) **EP 4 733 987 A1**
(43) Date of publication of application: **29.04.2026**
(21) Application number: 24825992.1
(22) Date of filing: 20.06.2024
(51) Int. Cl.: G06N 3/006, G16Y 40/35

(54) **CYBER-PHYSICAL SYSTEM AND COMPUTER SYSTEM**

(30) Priority: 23.06.2023 JP 2023103015
(71) Applicant: Toshiba Digital Solutions Corporation, Kawasaki-shi, Kanagawa 212-0013 (JP)
(72) Inventor: NAKAMURA, Kimihiro, Kawasaki-shi, Kanagawa 212-0013 (JP); HATANO, Ken, Kawasaki-shi, Kanagawa 212-0013 (JP); OMICHI, Shigeo, Kawasaki-shi, Kanagawa 212-0013 (JP); TAKEMOTO, Kiyoshi, Kawasaki-shi, Kanagawa 212-0013 (JP); KASAMI, Hideo, Tokyo 105-0023 (JP); YOSHII, Daigo, Tokyo 105-0023 (JP); MIYAZAKI, Shingo, Tokyo 105-0023 (JP); HIROSHIMA, Akira, Tokyo 105-0023 (JP)
(74) Representative: Hoffmann Eitle
(86) International application number: PCT/JP2024/022472
(87) International publication number: WO 2024/262591

(57) **Abstract**

[PROBLEM] To provide a mechanism in which various real-world "things" perform autonomous decision making on cyber space to allow operation from the viewpoint of the "things" such that the "things" achieve intended aims such as longevity, health, and contribution, thereby contributing to reduction in resource consumption and protection of the global environment and resources.

[SOLVING MEANS] A cyber-physical system according to embodiments includes a virtual will management section configured to model at least one thinking model corresponding to a real-world thing on cyber space and to determine the autonomous thinking characteristic of the thinking model based on predetermined thinking factors; a physical data interface section configured to provide physical data for the cyber space; a cyber space execution section configured to cause the thinking model to perform virtual thinking processing based on the autonomous thinking characteristic; and a cyber data interface section configured to output the result of autonomous thinking of the thinking model in the virtual thinking processing or information based on the result of autonomous thinking.

## Description

### TECHNICAL FIELD

Embodiments of the present invention relate to a technique for cyber-physical systems.

### BACKGROUND ART

Cyber-physical systems (CPSs) are one way to use cyber space (virtual space). The CPS provides a mechanism in which analysis results and accumulated information in the cyber space are fed back to a physical side (real-world side) to create added value. A digital twin is an example of the CPS. The digital twin represents a technique in which the same manufacturing and maintenance and environments as those in the real world are "reproduced" in the cyber space to perform operations similar to those in the real world.

### PRIOR ART DOCUMENT

### PATENT DOCUMENT

[Patent Document 1] Japanese Patent Laid-Open No. 2020-173598

### DISCLOSURE OF THE INVENTION

### PROBLEMS TO BE SOLVED BY THE INVENTION

In recent years, various attempts have been made to protect earth resources and achieve sustainable society and economy. An example thereof is an attempt to use "things" appropriately and carefully over a long time. To use "things" appropriately and carefully over a long time, those "things" need to be managed properly by humans. However, it is not realistic for humans to manage all "things" since it requires enormous time and effort (including cost).

It is an object of the present invention to provide a mechanism in which real-world "things" operate autonomously in the cyber space to achieve a cyber-physical system allowing those "things" to perform autonomous management on their own.

It is another object of the present invention to provide a mechanism in which virtual will models operate autonomously in the cyber space.

### MEANS FOR SOLVING THE PROBLEMS

A cyber-physical system according to embodiments includes a virtual will management section configured to model at least one thinking model corresponding to a real-world thing on cyber space and to determine the autonomous thinking characteristic of the thinking model based on predetermined thinking factors; a physical data interface section configured to provide collected physical data for the cyber space; a cyber space execution section configured to cause the thinking model to perform virtual thinking processing based on the autonomous thinking characteristic; and a cyber data interface section configured to output the result of autonomous thinking of the thinking model in the virtual thinking processing or information based on the result of autonomous thinking.

### BRIEF DESCRIPTION OF THE DRAWINGS

[Fig. 1] A conceptual diagram showing a cyber-physical system according to Embodiment 1.
[Fig. 2] A diagram showing the system configuration of the cyber-physical system according to Embodiment 1.
[Fig. 3] A diagram showing functional blocks of the cyber-physical system according to Embodiment 1.
[Fig. 4] A diagram showing a flow of processing in the cyber-physical system according to Embodiment 1.
[Fig. 5] A diagram showing an example of configuration of a virtual will module for operating a thinking model according to Embodiment 1.
[Fig. 6] A diagram showing a flow of virtual thinking processing of independent execution type according to Embodiment 1.
[Fig. 7] A diagram showing a flow of virtual thinking processing of mutual cooperation type according to Embodiment 1.
[Fig. 8] A diagram for explaining thinking factors according to Embodiment 1.
[Fig. 9] A diagram for explaining autonomous thinking characteristics based on the thinking factors according to Embodiment 1.
[Fig. 10] A conceptual diagram showing a computer system according to Embodiment 2.
[Fig. 11] A diagram showing the system configuration of the computer system according to Embodiment 2.
[Fig. 12] A diagram showing functional blocks of the computer system according to Embodiment 2.
[Fig. 13] A diagram showing a flow of processing in the computer system according to Embodiment 2.

### MODE FOR CARRYING OUT THE INVENTION

Embodiments of the present invention are hereinafter described with reference to the accompanying drawings.

### (Embodiment 1)

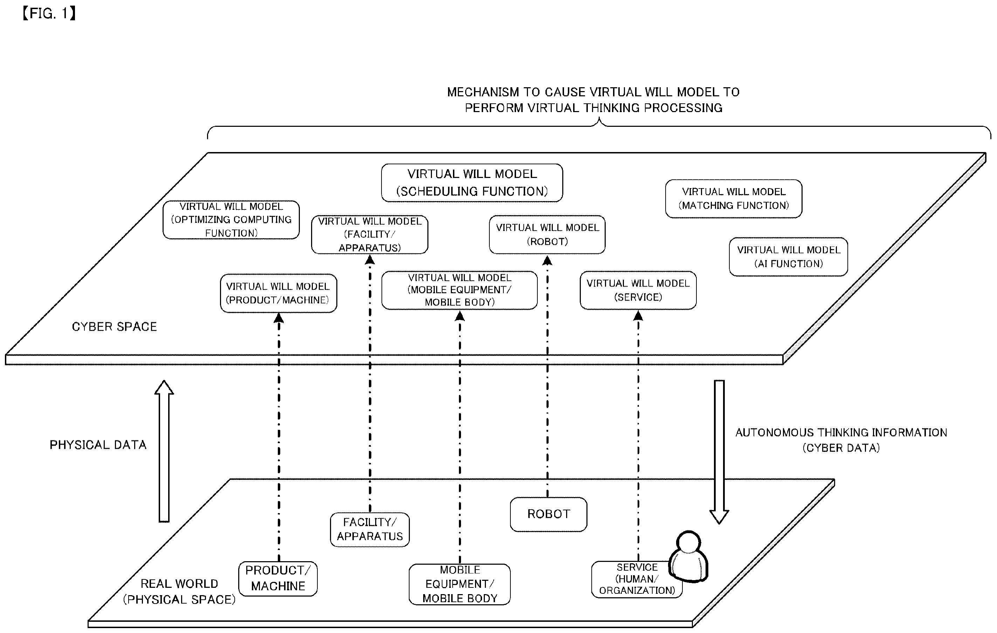

Figures 1 to 9 are diagrams for explaining Embodiment 1.

Embodiment 1 has a characteristic of having thinking models, later described, for providing a mechanism in which real-world "things" operate autonomously in cyber space. The thinking model represented on the cyber space has a plurality of types: for example, thinking models corresponding to real-world "things," thinking models corresponding to real-world "services," thinking models corresponding to humans or organizations which offer real-world services, and thinking models corresponding to entities not associated with real-world "things."

First, "things" in Embodiment 1 are described.

"Things" refer to real-world things, including tangible objects and perceptible entities (described in the seventh edition of Kojien (Japanese Dictionary)). While the following description shows facilities, machines, apparatuses, products, or vehicles operating in the real world as examples of "things," the present invention is not limited thereto. For example, entities for use in the cyber-physical system according to Embodiment 1 include artificial objects (such as facilities, machines, apparatuses, and mobile equipment/mobile bodies including vehicles, and robots, as well as structures including buildings, bridges, and roads, products distributed and used, processed products made from materials and ingredients, articles of manufacture and parts manufactured in manufacturing facilities and manufacturing machines, and articles of manufacture and parts made manually), agricultural and livestock products (for example, agricultural products or processed agricultural products, and livestock products and processed livestock products), natural products such as plants from nature (for example, natural resources including trees and flowers, and products from agriculture grown as agricultural products), and animals in nature (including livestock).

"Things" described in Embodiment 1 can include not only "things" having their own processing mechanisms and connection functions such as facilities, machines, apparatuses, and products, but also "things" which do not have their own processing mechanisms or connection functions. Specifically, "things" in Embodiment 1 can include, for example, parts of facilities, machines, apparatuses, and products, raw materials and fluids, and aggregations thereof.

As described above, "things" need to be managed in order to use them appropriately and carefully over a long time. There are vast numbers of "things, " however: for example, there may be a large number of different "things," and there may be a large number of the same "things." Thus, individual management of such numerous "things" involves a tremendous amount of time and effort.

Known CPSs can analyze collected sensor data on the cyber space or perform operations similar to those in the real world. The known CPSs thus have an aspect of capable of managing "things." However, the CPSs simply "reproduce" the real-world "things" on the cyber space and should still monitor and manage the reproduced "things" similarly to the conventional manual approach. To manage "things" for appropriate and careful use over a long time, the existing CPSs should individually monitor and manage a large number of "things" reproduced on the cyber space.

In addressing the issue, the present applicants have come to the idea that "things" are produced by humans to be used by them, but from the viewpoint of "things" instead of humans, a solution different from conventional ones can be provided.

Specifically, from the viewpoint of "things," they can be regarded as if they had their own wills to be used continuously over a long time for providing their intended functions and performance to fulfill their purposes for which they were created.

The present invention thus provides, by means of software, a mechanism (virtual will model) to represent "things" on the cyber space as if they had their own wills, the mechanism in which "things" operate autonomously on the cyber space by determining actions which they should take or by performing the determined actions. This mechanism allows virtual wills of "things" to be represented on the cyber space, including a will to be used over a long time (longevity of "things"), a will to continuously provide the intended functions and performance of "things" (health of "things"), and a will to be continuously useful (contribution of "things") .

Figure 1 is a conceptual diagram showing a cyber-physical system according to Embodiment 1. Although real-world "things" actually have no will, the system models virtual will models on the cyber space such that they correspond to "things" and act on the wills of the "things" as if those "things" had their own wills.

For example, the system has represented thinking models with software that share common goals among a number of "things," such as "longevity (long life)", "health (keeping a predetermined condition)," and "keeping proper functionality (involving maintenance, repair, and replenishment)." The system causes the thinking models to perform virtual thinking processing, thereby allowing them to operate as the virtual will models. This can provide a mechanism in which "things" autonomously think to reduce resource consumption and waste due to consumption of "things."

The cyber-physical system according to Embodiment 1 represents and operates the virtual will models for using "things" appropriately and carefully over a long time with software on the cyber space to achieve autonomous management of "things" on their own.

"Services" mentioned above are now described in detail. The cyber-physical system according to Embodiment 1 can represent and operate not only the virtual will models of real-world "things" but also virtual will models of real-world "services" offered to real-world "things" on the cyber space. Specifically, the cyber-physical system can represent, as virtual will models on the cyber space, services offered to real-world "things" by humans or organizations in social activities and economic activities of the real world. Without being limited thereto, the cyber-physical system can also represent, as virtual will models on the cyber space, services offered not to real-world "things" by humans or organizations. For example, there are services offered to humans and organizations such as management consulting. The services offered to humans or organizations instead of "things" fall within the "services" according to Embodiment 1, and those services can be represented as virtual will models on the cyber space. By way of example, the services according to Embodiment 1 refer to services and benefits in the real world offered by humans, organizations, things, machines, apparatuses, and products, regardless of whether the services are paid or free.

The thinking model modeled on the cyber space corresponding to each "thing" can be configured to hold various types of information relating to the "thing", such as basic information (including product name, manufacturing number, ID, and manufacturing classification), configuration information (components), specification information (including rating and performance), status information (including operation time, performance value, fuel efficiency), surrounding environment information (including location, temperature, humidity, wind direction, and wind speed), maintenance history information (including inspection records, maintenance records, part replacements, consumables), and histories (including manufacturing site, manufacturer, user, and administrator).

The thinking model for each of the services offered to "things" can be configured to hold various types of information relating to the service, such as basic information (including service name and offered service details), service target information (including designated target for service), service specifications (including service level, available period and time zone, conditions for service, and place to offer), service charge information (including service conditions and associated charge), and service history information.

Description is now made of others than the "things" and "services." Modeling targets on the cyber space include others than the "things" and "services" described above, that is, modeling targets not associated with real-world "things" as described below. The cyber-physical system 100 according to Embodiment 1 can cover the modeling targets not associated with real-world "things." A virtual will management section 122 can model, on the cyber space, an unlinked thinking model which has interrelation with a thinking model corresponding to a "thing" and performs virtual thinking processing with no link to any real-world "thing."

The unlinked thinking model includes, for example, an agent function of intermediating between thinking models of "things," a matching function of matching with a cooperative partner, a scheduling function of promoting execution of an action at an appropriate period and time zone, an optimizing computing function of optimizing energy consumption and action execution, and an AI function.

The unlinked thinking model is configured similarly to the thinking model linked to the real-world "thing" described above except that the former is not linked to any real-world "thing." The unlinked thinking model also operates as a virtual will model that its autonomous thinking characteristic is determined and performing the virtual thinking processing described above with a cyber space execution section 123.

### <System Configuration>

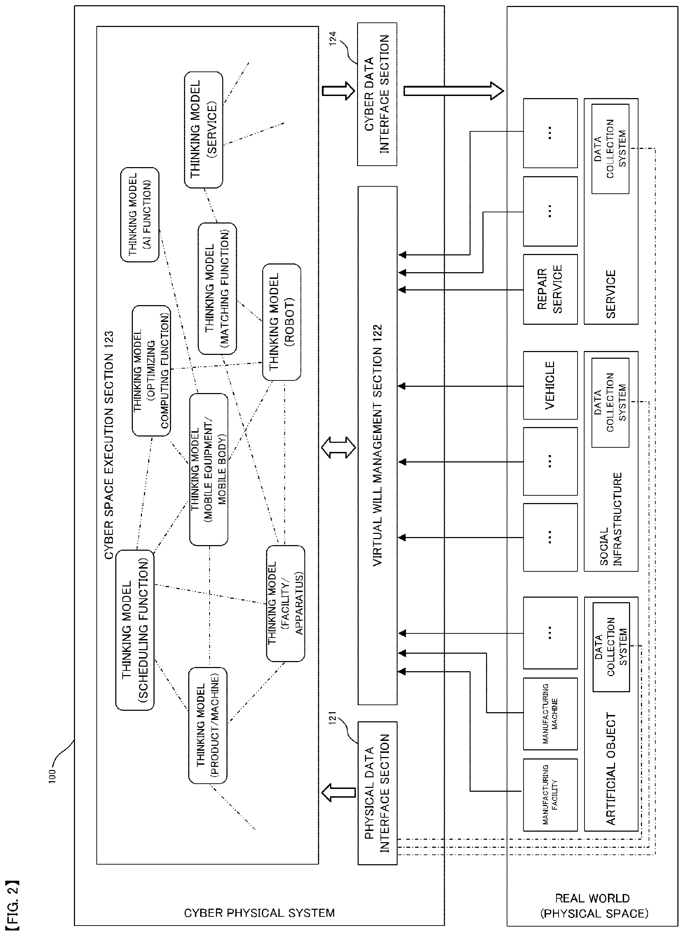

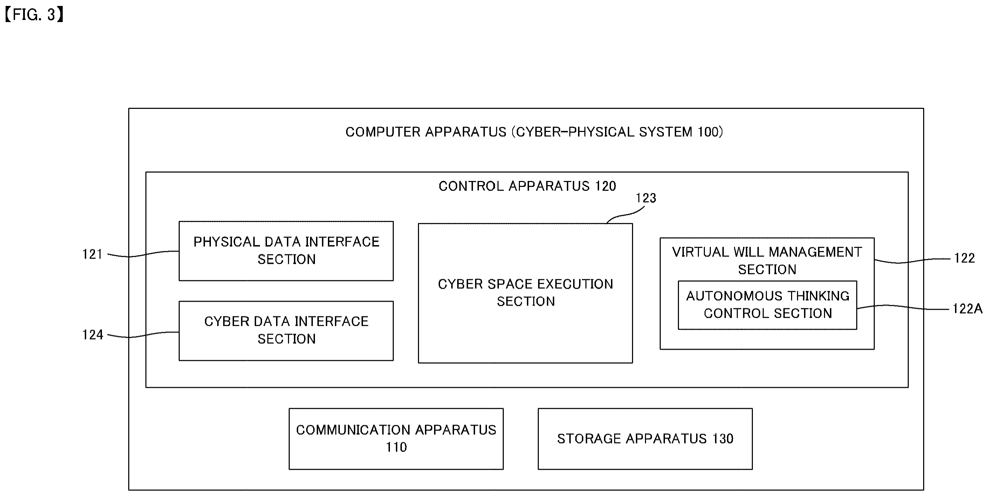

Figure 2 is a diagram showing the system configuration of the cyber-physical system 100 according to Embodiment 1. Figure 3 is a diagram showing functional blocks of the cyber-physical system 100.

As shown in Fig. 3, the cyber-physical system 100 comprises a communication apparatus 110, a control apparatus 120, and a storage apparatus 130. The control apparatus 120 includes a physical data interface section 121, the virtual will management section 122, an autonomous thinking control section 122A, the cyber space execution section 123, and a cyber data interface section 124.

In Fig. 2, the physical data interface section 121 provides information collected in the real world, for example information collected by a predetermined data collection system (such as a sensor system), for the cyber space. The physical data interface section 121 can acquire physical data such as sensor data from the data collection system via the communication apparatus 110. In addition to the data collection system, the physical data interface section 121 can receive physical data, for example from a predetermined observation apparatus or equipment (including a sensor, an equipment signal, and an imaging apparatus) and provide the physical data for the cyber space. The physical data interface section 121 can also associate the physical data with the corresponding modeled thinking model such that each thinking model can use the associated physical data.

There are various types of "things" such as facilities, machines, apparatuses, products, and mobile bodies (including vehicles and flying objects) in the real world (physical world), and a collection or combination of the "things" constitute artificial objects or social infrastructures. The same applies to services. Services such as a repair service are offered to real-world "things" by humans and organizations.

The virtual will management section 122 models thinking models corresponding to the real-world "things" or "services" on the cyber space. Specifically, the virtual will management section 122 receives input of a modeling target and creates a thinking model corresponding to the input target. The virtual will management section 122 includes the autonomous thinking control section 122A to determine the autonomous thinking characteristic of the created thinking model based on predetermined thinking factors.

The cyber space execution section 123 is a functional section which operates each thinking model modeled on the cyber space and achieves autonomous operation of each thinking model under software control (program control). The cyber space execution section 123 causes each thinking model to perform virtual thinking processing based on the autonomous thinking characteristic such that the thinking model operates as a virtual will model (see Fig. 1) which virtually has its own will and autonomously behaves on the cyber space.

The cyber data interface section 124 outputs the result of the virtual thinking processing performed by each thinking model on the cyber space. The result of the virtual thinking processing is the result of autonomous thinking of the thinking model in the virtual thinking processing or the information based on the result of autonomous thinking. For example, the cyber data interface section 124 can output the result of the virtual thinking processing on a predetermined display apparatus, transmit the result to a predetermined device over a network, or store the result in a predetermined storage region. The cyber data interface section 124 can also notify a predetermined human or organization of the result to allow execution of service or the like in the real world.

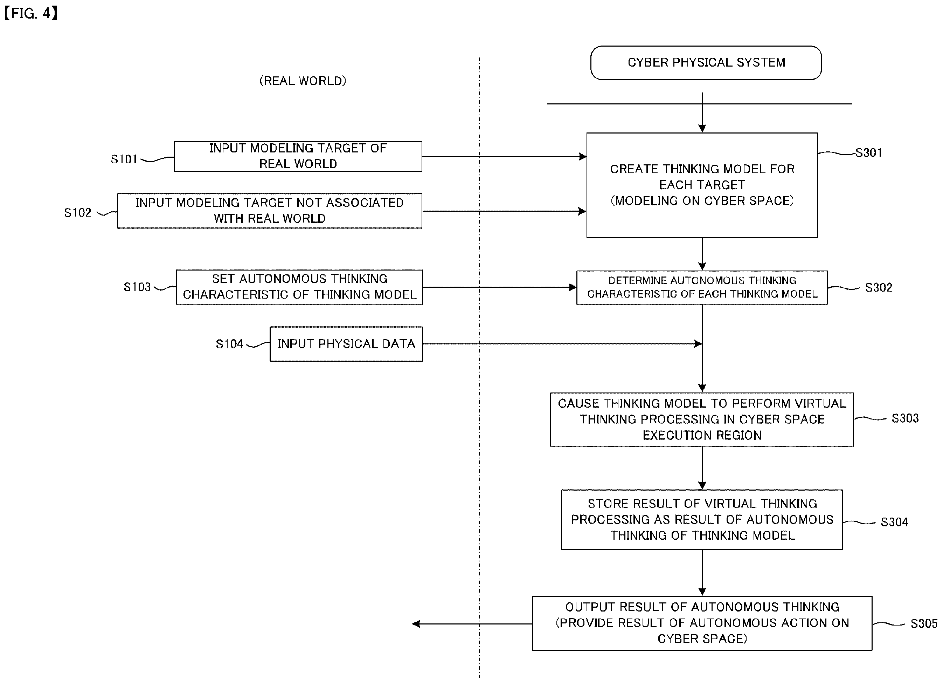

Figure 4 is a diagram showing a flow of processing in the cyber-physical system 100 according to Embodiment 1. A modeling target is input to the cyber-physical system 100 (S101). The modeling target is a real-world "thing." The input of the modeling target to the cyber-physical system 100 can be performed without an input means such as a terminal. For example, products can be sensed in a manufacturing facility and the sensed products can be automatically input as the modeling target. In this manner, a mechanism to link to a real-world "thing" can be introduced in advance, and in response to actual appearance of the real-world "thing," or in response to recognition of the real-world "thing," the corresponding thinking model can be automatically modeled on the cyber space. Since there are a large number of the same real-world "things" and different real-world "things" as described above, the mechanism to automatically model the "thing" on the cyber space in response to appearance or recognition of the "thing" in the real world contributes largely to reduction in efforts and cost. It should be noted that the system can be configured to have a function of inputting a modeling target with an input means such as a terminal.

In addition to real-world "things," a modeling target not associated with a real-world "thing" can be input (S102).

The virtual will management section 122 creates a thinking model corresponding to the input modeling target (S301). The autonomous thinking control section 122A performs control to allow setting of one or more different thinking factors constituting an autonomous thinking characteristic and sets the thinking factor for the created thinking model (S103). The autonomous thinking control section 122A determines the autonomous thinking characteristic of the created thinking model based on the set thinking factor (S302). The determined autonomous thinking characteristic is applied to the associated thinking model.

The aspect of setting the thinking factor can be configured, for example, such that the thinking factor to be set is previously determined and the autonomous thinking characteristic is determined automatically in creating the thinking model (presetting of autonomous thinking characteristic). Alternatively, an input means such as a terminal can be used to input the thinking factor to be set for each thinking model so as to determine the autonomous thinking characteristic.

The cyber-physical system 100 receives input of physical data in the physical data interface section 121 (S104).

The cyber space execution section 123 of the cyber-physical system 100 causes each thinking model to operate in the cyber space execution region and perform virtual thinking processing based on the autonomous thinking characteristic (S303). The cyber-physical system 100 stores the result of the virtual thinking processing performed on the cyber space by each thinking model into the storage apparatus 130 (S304). The cyber-physical system 100 outputs the result of autonomous thinking of the thinking model in the virtual thinking processing or the information based on the result of autonomous thinking through the cyber data interface section 124(S305).

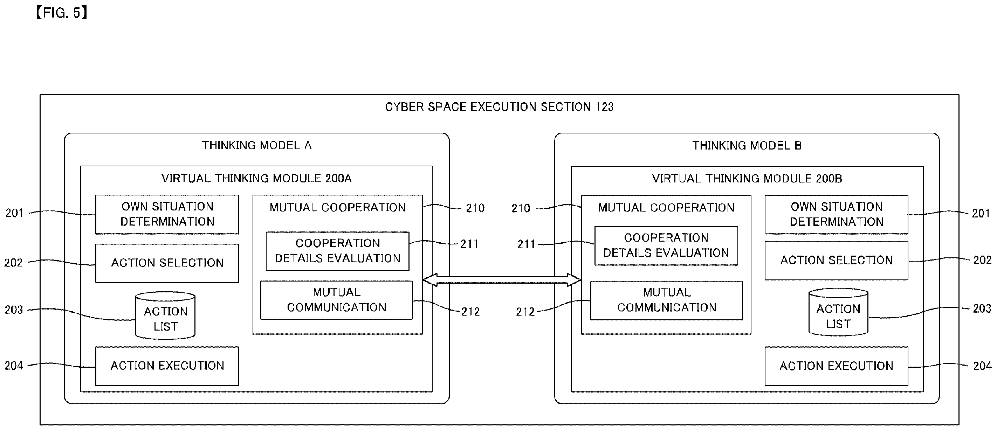

Figure 5 is a diagram showing an example of configuration of a virtual will module for operating the thinking model. As described above, the thinking model is configured as software (program) to be executed by the cyber space execution section 123, and one virtual will module 200 is used for one thinking model. In the example of Fig. 5, a virtual thinking module 200A and a virtual thinking module 200B are used for a thinking model A and a thinking model B, respectively. It should be noted that the virtual thinking modules used for the respective thinking models have the same functions.

The virtual will module 200 includes an own situation determination function 201, an action selection function 202, an action list 203, an action execution function 204, and a mutual cooperation function 210. The mutual cooperation function 210 serves as a functional section configured to communicate with the virtual will module 200 of another thinking model and includes a cooperation details evaluation function 211 and a mutual communication function 212.

The own situation determination function 201 performs situation determination processing based on physical data and other data. The situation determination processing includes using the physical data and other data relating to the pertinent thinking model acquired thorough the physical data interface section 121 to know and analyze the own state and situation of the pertinent thinking model and output the result. In other words, the situation determination processing is performed for determining the situation to take appropriate actions depending on the situation. The situation determination processing may be configured to use not only the physical data relating to the pertinent thinking model but also physical data or the result of situation determination processing relating to another thinking model to analyze the influences of the other thinking model, allowing determination of the own state and situation of the pertinent thinking model.

The action selection function 202 serves as a control section configured to select an action depending on the result of situation determination processing by determining, based on the autonomous thinking characteristic, whether the result of situation determination processing shows the need of an action of independent execution type which can be executed by the pertinent thinking model or an action of mutual cooperation type which requires cooperation of another thinking model. The determination of which action is needed includes determining which one of the action of independent execution type and the action of mutual cooperation type is required and determining that none of those actions are required (determining that none of those actions should not be executed). Specifically, the action selection function 202 performs the processing of determining whether or not the result of situation determination processing shows the need of any action, and in response to the need of any action, determining which of the action of independent execution type and the action of mutual cooperation type is required, and selecting the required action.

In response to selection of the action of independent execution type, the action selection function 202 selects, from candidate actions belonging to the action of independent execution type included in the action list 203, a candidate action matching the result of situation determination processing based on the autonomous thinking characteristic and determines the selected candidate action as an execution action.

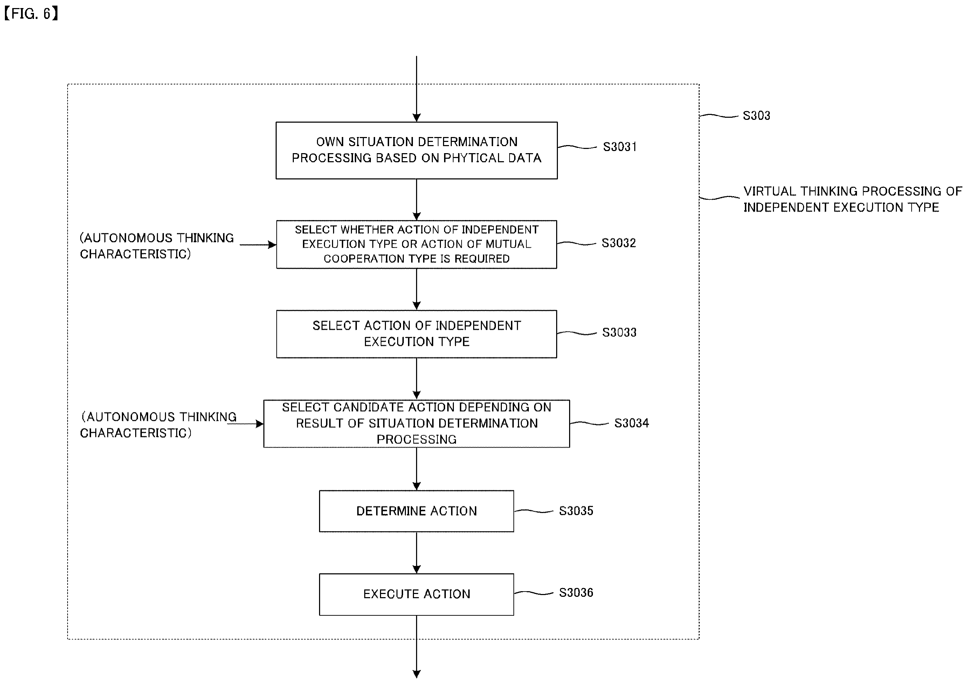

Figure 6 is a diagram showing a flow of virtual thinking processing of independent execution type (first virtual thinking processing) corresponding to step S303 in Fig. 4. As shown in Fig. 6, the virtual thinking processing of independent execution type corresponds to processes including the situation determination processing (S3031), the determination of whether the action of independent execution type or the action of mutual cooperation type is required (S3032), in response to selection of the action of independent execution type (S3033), the selection of a candidate action belonging to the action of independent execution type that matches the result of situation determination processing from the action list 203 based on the autonomous thinking characteristic (S3034), and the determination of the selected candidate action as the execution action (S3035), as described above. In other words, the cyber space execution section 123 causes the virtual will module 200 to perform the virtual thinking processing of independent execution type to implement the mechanism in which the thinking model autonomously operates. In response to determination that the action of independent execution type can solve the current problem at step S3032, the virtual thinking processing of independent execution type is selected and performed.

The action execution function 204 performs the determined execution action (at step S3036 in Fig. 6). The execution of the action includes outputting the determined execution action to the real world through the cyber data interface section 124 and storing the execution action in the storage apparatus 130. In addition, the action execution function 204 performs processing of reflecting the result of execution of the determined execution action in the thinking model to update the thinking model (such as the state of the "thing") . The result of autonomous thinking of the thinking model in the virtual thinking processing or the information based on the result of autonomous thinking is fed back to the real world through the cyber data interface section 124. The result of autonomous thinking is the execution action described above, for example. The information based on the result of the autonomous thinking is information relating to the determined execution action notified to the "thing" or the associated human or organization in the real world, for example. The result of execution of the determined execution action can also be fed back to the real world as information based on the result of autonomous thinking.

While the example of Fig. 6 has been described in an aspect wherein the process (S3036) of executing the determined execution action is included in the virtual thinking processing of independent execution type, the present invention is not limited thereto. Specifically, step S3036 can be performed at a different time from the virtual thinking processing of independent execution type after step S3035 of determining the selected candidate action as the execution action.

As described above, the action selection function 202 determines, based on the autonomous thinking characteristic, whether the result of the situation determination processing shows the need of the action of independent execution type which can be executed by the pertinent thinking model or the action of mutual cooperation type which requires cooperation of another thinking model. In response to selection of the action of mutual cooperation type, the action selection function 202 evaluates cooperation details presented by another thinking model using the mutual cooperation function 210 based on the autonomous thinking characteristic and determines the action of mutual cooperation type based on the cooperation details as the execution action.

When the action selection function 202 selects the action of mutual cooperation type, the mutual cooperation function 210 causes the cooperation details evaluation function 211 to perform evaluation processing of evaluating the cooperation details presented by another thinking model based on the autonomous thinking characteristic. The mutual cooperation function 210 then causes the mutual communication function 212 to perform processing of mutual communication with a cooperative partner relating to the result of evaluation processing to create an agreement based on transaction conditions held by the respective thinking models. The action execution function 204 determines a candidate action corresponding to the cooperative partner in the mutual communication processing as the execution action.

The mutual communication function 212 may include the following transaction processing (transaction functions). For example, the mutual cooperation functions 210 of the pertinent thinking model and the thinking model of the cooperative partner can communicate with each other. In such a case, a known Smart Contract technique for software-based automatic contract can be used to specify a transaction protocol in which preset transaction conditions of both parties are matched and, when the conditions are satisfied, predetermined processing is automatically performed. Specifically, a transaction contract to conduct a cooperative transaction is automatically executed. The mutual communication function 212 can perform transaction processing with the mutual communication function 212 of the cooperative partner (interaction for creating an agreement based on the transaction conditions of both of them) through the transaction protocol scheme.

The transaction protocol scheme can specify, for example, a sequence of events in the transaction contract and include protocols for processes to aim for agreement such as negotiation, comparison, and determination before contrast conclusion, reception and holding of requests in each of the processes, and contact cancellation. The cyber space execution section 123 can provide the transaction protocol for use in transaction processing of the mutual communication function 212, and the mutual communication function 212 can perform the transaction processing based on the transaction protocol. For example, as a result of negotiation before contract conclusion in various processes of aiming for agreement, no agreement may be created. Specifically, the mutual communication function 212 performs various processes of aiming for agreement by interacting with the mutual communication function 212 of the partner in order to create an agreement based on the transaction conditions of both thinking models, but as a result, no agreement may be created with the partner. In such a case, the mutual communication function 112 determines that no cooperation can be provided by the partner. The mutual cooperation function 210 can perform mutual communication processing with another cooperative partner evaluated in the evaluation processing described above for creating an agreement based on the transaction conditions.

The following approaches are used to acquire cooperation details presented by another thinking model to perform the evaluation processing.
(1) Each thinking model holds candidate actions belonging to the action of independent execution type and candidate actions belonging to the action of mutual cooperation type in the action list 202. The cooperation details evaluation function 211 can perform the evaluation processing of evaluating the cooperation details of each candidate action belonging to the action of mutual cooperation type held in the action list 202 based on the autonomous thinking characteristic.

In this case, the action list 202 is configured to include the candidate action (first candidate action) belonging to the action of independent execution type, the candidate action (second candidate action) belonging to the action of mutual cooperation type including cooperation details presented by another thinking model, and the candidate action (third candidate action) belonging to the action of mutual cooperation type including cooperation details which can be provided from oneself for another thinking model modeled in the cyber space. The cyber space execution section 123 can perform candidate action providing processing of providing the third candidate action held in the action list 202 of each thinking model for another thinking model. Each thinking model can treat the shared third candidate action as the second candidate action (the candidate action belonging to the action of mutual cooperation type including cooperation details presented by another thinking model), and the cooperation details evaluation function 211 can perform the evaluation processing using the action list 202.

To hold the candidate action (the second candidate action) belonging to the action of mutual cooperation type including cooperation details presented by another thinking model in the own action list 202, a known approach can be employed as appropriate. By way of example, a known Pub/Sub messaging technique may be used. In the Pub/Sub messaging technique, a client which creates and transmits a message is referred to as a publisher, whereas a client which receives the message is referred to as a subscriber. The message transmitted from the publisher is registered in destination called a topic, and the message registered in topic is delivered to one or more subscribers which subscribe to the topic.

With the use of the known Pub/Sub messaging technique, the cyber space execution section 123 can be configured to have a function of providing one or more topics for storing the third candidate action transmitted from the thinking model and delivering the third candidate action registered in the topic to a thinking model which wishes delivery from the topic. The cyber space execution section 123 previously receives, from each thinking model, the subscription of one or more topics which the thinking model wishes to deliver, and each thinking model transmits the third candidate action to the topic (destination) . This configuration allows each thinking model to select and collect the required second candidate action from the topics and to provide the third candidate action for another thinking model appropriately.

(2) In the case of (1), each thinking model holds the candidate action (second candidate action) belonging to the action of mutual cooperation type including cooperation details presented by another thinking model in the action list 202. Alternatively, the second candidate action may not be held in the action list 202 to enable dynamic use of an action presented by another thinking model.

Specifically, each thinking model includes, in the action list 202, the candidate action (first candidate action) belonging to the action of independent execution type and the candidate action (third candidate action) belonging to the action of mutual cooperation type including cooperation details which can be provided from oneself for another thinking model modeled in the cyber space.

The cyber space execution section 123 can perform the candidate action providing processing of collecting the third candidate action held by each thinking model, holding them in a predetermined storage region, and providing the candidate action belonging to the action of mutual cooperation type for another thinking model. In other words, the cyber space execution section 123 provides a viewing region for each thinking model to see actions of the mutual cooperation type which can be provided by another thinking models and each thinking model refers to the viewing region. The cooperation details evaluation function 211 can perform the evaluation processing of evaluating the cooperation details of the candidate actions belonging to the action of mutual cooperation type accumulated in the viewing region based on the autonomous thinking characteristics.

(3) The thinking model can acquire the second candidate action from another thinking model in an interactive manner without holding the second candidate action in the action list 202 similarly to (2) described above, and then the evaluation processing can be performed.

Specifically, each thinking model includes, in the action list 202, the candidate action (first candidate action) belonging to the action of independent execution type and the candidate action (third candidate action) belonging to the action of mutual cooperation type including cooperation details which can be provided from oneself for another thinking model modeled in the cyber space.

The mutual cooperation function 210 can perform processing of inquiring of another thinking model and answer processing of outputting the candidate action (third candidate action) belonging to the action of mutual cooperation type including cooperation details in response to an inquiry from another thinking model. The inquiry processing includes acquiring the candidate action (second candidate action) belonging to the action of mutual cooperation type from another thinking model. The answer processing includes providing, in response to an inquiry from another thinking model, the candidate action (third candidate action) belonging to the action of mutual cooperation including cooperation details which can be provided for the another thinking model from the action list 202. The mutual cooperation function 210 can perform interaction processing including the inquiry processing and the answer processing. The cooperation details evaluation function 211 can perform processing of evaluating the cooperation details acquired through the interaction processing based on the autonomous thinking characteristics.

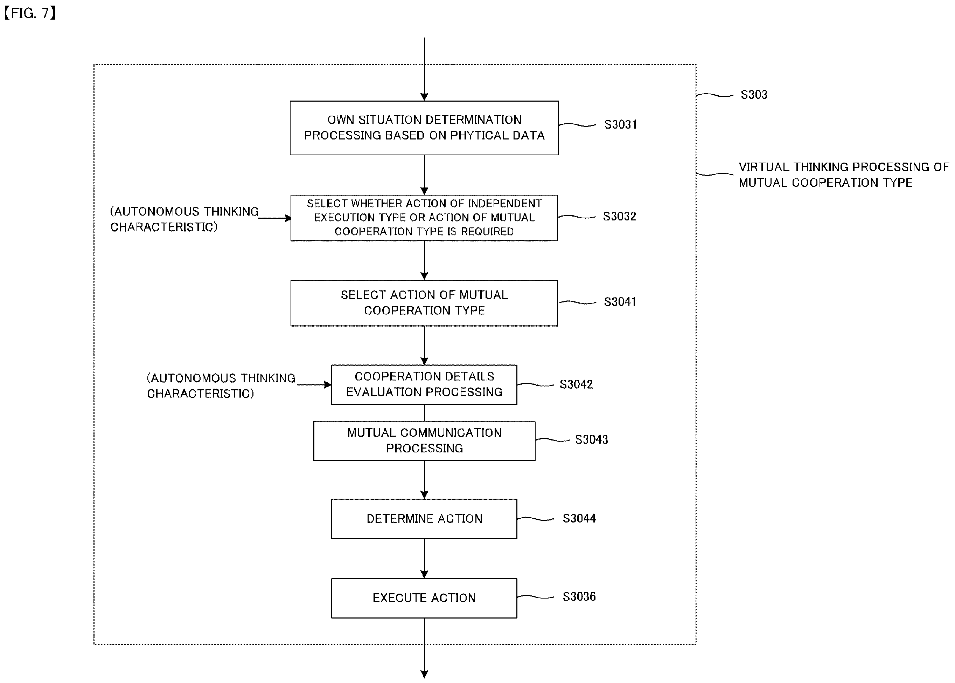

Figure 7 is a diagram showing a flow of virtual thinking processing of mutual cooperation type (second virtual thinking processing) corresponding to step S303 in Fig. 4. The processing operations identical to those in the virtual thinking processing of independent execution type shown in Fig. 6 are designated with the same reference numerals.

As shown in Fig. 7, the virtual thinking processing of mutual cooperation type corresponds to processes including the situation determination processing (S3031), the determination of whether the action of independent execution type or the action of mutual cooperation type is required (S3032), in response to selection of the action of mutual cooperation action (S3041), the cooperation details evaluation processing (S3042), the mutual communication processing with a cooperative partner relating to the result of the evaluation processing (S3043), the determination of a candidate action corresponding to the cooperative partner in the mutual communication processing as the execution action (S3044). The cyber space execution section 123 performs the virtual thinking processing of mutual cooperation type in the virtual will module 200 to implement the mechanism in which the thinking model autonomously operates. In response to determination that cooperation of another thinking model is required to solve the current problem at step S3032, the virtual thinking processing of mutual cooperation type is selected and performed.

The action execution function 204 performs the determined execution action (step S3036 in Fig 7). Similarly to the foregoing, in the virtual thinking processing of mutual cooperation type, the execution of the action includes outputting the determined execution action to the real world through the cyber data interface section 124 and storing the execution action in the storage apparatus 130. In addition, the action execution function 204 performs processing of reflecting the result of execution of the determined execution action in the thinking model to update the thinking model (such as the state of the "thing").

The action is executed by the action execution functions 204 in both of the thinking models having a cooperative relationship. Thus, the action selection function 202 associated with the cooperating party also determines, as the execution action, the action to be provided for the cooperated party with which an agreement has been made (for example, a transaction contract has been concluded) through the mutual cooperation function 210. Then, the action execution function 204 executes the determined execution action (step S3036 in Fig. 6 or Fig. 7) .

### <Description of Thinking Factor and Autonomous Thinking Characteristic>

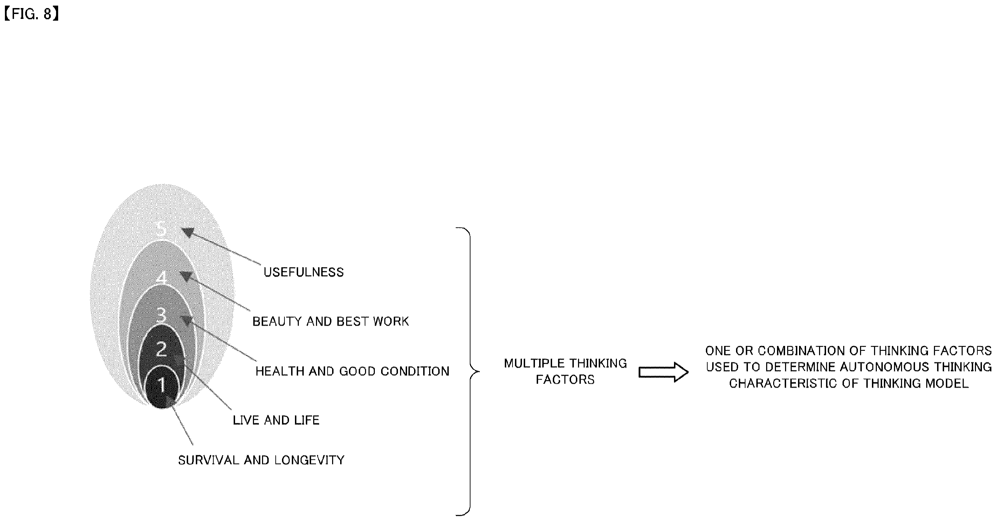

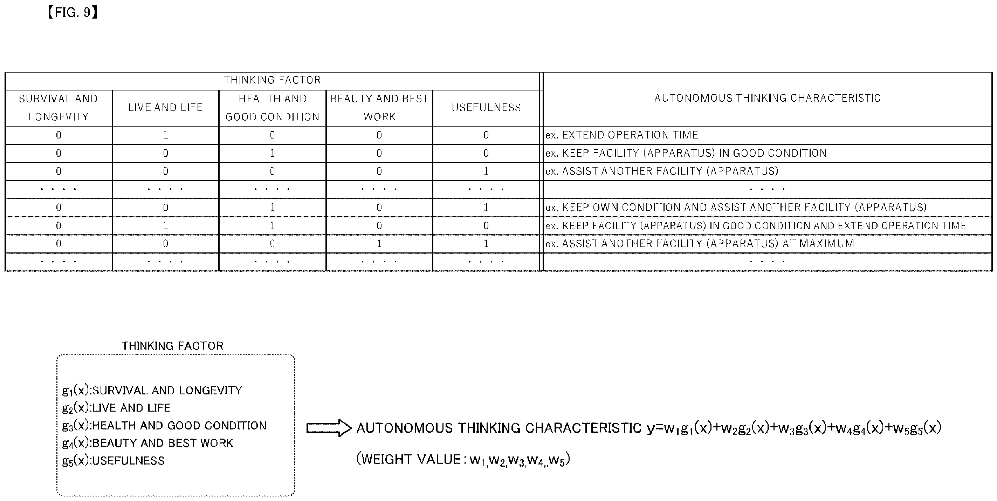

Figure 8 is a diagram for explaining the thinking factors according to Embodiment 1. Figure 9 is a diagram for explaining the autonomous thinking characteristics based on the thinking factors.

As shown in Fig. 8, the thinking factors include a first thinking factor responsible for "survival and longevity," a second thinking factor responsible for "live and life," a third thinking factor responsible for "health and good condition," a fourth thinking factor responsible for "beauty and best work," and a fifth thinking factor responsible for "usefulness." The example of Fig. 8 shows a thinking factor unit of hierarchical structure in which the second to fifth thinking factors form their respective layers starting from (centered around) the first thinking factor.

Description is now made with a facility used as an example. The first thinking factor "survival and longevity" is a factor which creates a thinking tendency (goal) to continue to exist, for example. The second thinking factor "live and life" is a factor which creates a thinking tendency (goal) to continue to operate, for example. The third thinking factor "health and good condition" is a factor which creates a thinking tendency (goal) to operate in the best possible condition by keeping a predetermined condition or proper functionality (including appropriate maintenance, repair, and replenishment), for example. The fourth thinking factor "beauty and best work" is a factor which creates a thinking tendency (goal) to achieve the best performance (achieve the maximum function and performance), for example. The fifth thinking factor "usefulness" is a factor which creates a thinking tendency (goal) to contribute to others by supporting others and offering services. The fifth thinking factor "usefulness" includes a factor similar to satisfaction of desire for approval from others or society through contribution to others.

One of the thinking factors or a combination of some of the thinking factors can be used to determine the autonomous thinking characteristic of each thinking model. For example as shown in Fig. 9, the autonomous thinking control section 122A can perform control to specify one or more different thinking factors by holding table information in which each thinking factor can be specified. The autonomous thinking control section 122A can also perform control such that the autonomous thinking characteristic of each thinking model can be determined based on the specified thinking factor.

For example as shown in Fig. 9, the autonomous thinking control section 122A defines the autonomous thinking characteristic with a function including the five thinking factors. The autonomous thinking control section 122A can perform control to allow setting of weigh values for the different thinking factors and to determine the autonomous thinking characteristic based on one or more different thinking factors using the set weight values.

The autonomous thinking characteristics are now described with reference to the table in Fig. 9. For the thinking model "facility, " as shown in Fig. 9, the autonomous thinking characteristic provided by specifying the second thinking factor "live and life" has the characteristic of extending the operation time (to allow operation for a longer time). The autonomous thinking characteristic provided by specifying the third thinking factor "health and good condition" has the characteristic of keeping the facility (apparatus) in a good condition. The autonomous thinking characteristic provided by specifying the fifth thinking factor "usefulness" has the characteristic of assisting another facility.

The autonomous thinking characteristic provided by specifying the third thinking factor "health and good condition" and the fifth thinking factor "usefulness" has the characteristic of keeping the own condition and assisting another facility (apparatus). The autonomous thinking characteristic provided by specifying the second thinking factor "live and life" and the third thinking factor "health and good condition" has the characteristic of keeping the facility in a good condition and extending the operation time. The autonomous thinking characteristic provided by specifying the fourth thinking factor "beauty and best work" and the fifth thinking factor "usefulness" has the characteristic of assisting another facility to the maximum.

The autonomous thinking control section 122A can perform control to dynamically change the thinking factor or the combination of different thinking factors in response to physical data corresponding to each thinking model or the result of situation determination processing based on physical data. Instead of dynamic changing, the autonomous thinking control section 122A can perform control to statically hold (fix) autonomous thinking characteristics once they are determined. Multiple thinking models modeled on the cyber space can include thinking models whose autonomous thinking characteristics determined at the time of thinking model creation are not changed and thinking models whose autonomous thinking characteristics are changed dynamically after the thinking model creation.

As described above, the first thinking factor ("longevity (long life) ") and the third thinking factor ("health (keeping a predetermined condition) " and "keeping proper functionality (including appropriate maintenance, repair, replenishment)") can be incorporated into the autonomous thinking characteristic of each thinking model as thinking factors (goals) shared by various "things." In other words, a predetermined thinking factor or predetermined different thinking factors can be automatically set in the same type of "things" or the same type of benefit or function provided by "things" to determine the autonomous thinking characteristics. This allows the shared thinking factors (goals) to be incorporated as shared software or setting instead of different thinking factors incorporated into a large number of different "things." Conversely, for the same types of "things" or the same type of benefit or function provided by "things," different thinking factors or different combinations of thinking factors can be set to determine the autonomous thinking characteristics.

As described above, the autonomous thinking characteristic of the thinking model according to Embodiment 1 can be determined based on one thinking factor or a combination of different thinking factors. For example, a virtual will model can be provided by a thinking model capable of autonomous decision making such as contribution to others as long as the longevity or health is not impaired.

It should be noted that the five thinking factors described above are illustrative and other thinking factors can be used to determine the autonomous thinking characteristic. In addition, the group of thinking factors for determining the autonomous thinking characteristic is arbitrarily set. For example, the autonomous thinking characteristic can be determined by forming a group of thinking factors consisting of three thinking factors out of the five thinking factors described above and selecting one of or a combination of some of the three thinking factors.

The virtual thinking processing based on the autonomous thinking characteristic is now described with reference to a thinking model "mobile body" as a specific example. It is assumed that the second thinking factor "live and life" is specified for the autonomous thinking characteristic. In the virtual thinking processing of independent execution type shown in Fig. 6, it is also assumed that the result of the situation determination processing at step S3031 shows that the degree of degradation of a drive battery is less than a defined value. In this case, the thinking model "mobile device" can make an evaluation based on the autonomous thinking characteristic such that no problems occur when the device continues to operate without replacing the drive battery since the degree of degradation of the drive battery is less than the defined value for battery replacement. The thinking model "mobile body" determines that the action of mutual cooperation type is not required due to no need of replacement of the drive battery at step S3032, and selects the action of independent execution type (S3033).

At step S3034, the thinking model "mobile body" selects a candidate action belonging to the action of independent execution type from the action list 203. Specifically, the thinking model "mobile body" selects a candidate action which matches the result of the situation determination processing (showing the degree of degradation of the drive battery less than the defined value for battery replacement) based on the autonomous thinking characteristic. For example, the thinking model "mobile body" can select an action of charging the drive battery to full capacity since the degree of degradation of the drive battery is less than the defined value for battery replacement.

In the virtual thinking processing of mutual coordinate type shown in Fig. 7, it is assumed that the result of the situation determination processing at step S3031 shows that the degree of degradation of the drive battery is equal to or higher than the defined value. In this case, the thinking model "mobile body" can make an evaluation based on the autonomous thinking characteristic such that the drive battery should be replaced since the degree of degradation of the drive battery is equal to or higher than the defined value for battery replacement. The thinking model "mobile body" determines that the action of independent execution type is not required due to the need of replacement of the drive battery at step S3032, and selects the action of mutual cooperation type (S3041).

When the "thing" corresponding to the thinking model is the mobile body (hereinafter referred to as the thinking model "mobile body"), the thinking model evaluates cooperation details including battery replacement operation presented by another thinking model based on the autonomous thinking characteristic in order to undergo maintenance of drive battery replacement (S3042). For example, the thinking model "mobile body" highly evaluates cooperation details which allow earlier battery replacement operation since longer operation time is desired. The thinking model "mobile body" performs mutual communication processing with a cooperative partner presenting the cooperation details which allow earlier battery replacement operation and determines, as an execution action, a candidate action corresponding to the cooperative partner engaged in the mutual communication processing.

The determination and selection based on the autonomous thinking characteristic are different for different autonomous thinking characteristics. For example, when the thinking model "mobile body" has an autonomous thinking characteristic provided by specifying the third thinking factor "health and good condition" in addition to the second thinking factor "live and life," the autonomous thinking characteristic has the characteristic of extending the operation time of the mobile body while keeping it in a good condition. Thus, the thinking model determines that the drive battery should be replaced even when the degree of degradation of the drive battery is less than the defined value, and selects the action of mutual cooperation type. This is different from the determination and selection based on the autonomous thinking characteristic provided by specifying only the second thinking factor "live and life."

As described above, the thinking processing using the first to fifth thinking factors allows "things" to autonomously achieve the longevity and health (keeping of condition), leading to reduction in resource consumption and waste, and contribution to global environment.

In the cyber-physical system 100 according to Embodiment 1, "things" in real-world that do not have their wills actually have their wills virtually on the cyber space, thereby allowing implementation of the cyber space where the "things" act on their wills.

Specifically, the system provides the mechanism in which "things" operate on their wills by causing the thinking models modeled on the cyber space to perform the virtual thinking processing based on the autonomous thinking characteristics using software. The virtual thinking processing based on the autonomous thinking characteristics enables the respective thinking models to operate as the virtual will models behaving with their autonomous wills.

This allows "things" to perform autonomous management for appropriately and carefully using real-world "things" for a long time.

In the cyber-physical system 100 according to Embodiment 1, real-world "things" can be modeled as the thinking models on the cyber space and operate autonomously without manual intervention, which achieve the following specific advantages.

Software can represent virtual wills of things even when it is simple with no computing functionality. This can dramatically increase the number of things participating in the cyber space to significantly expand the range in which "things" are interconnected and cooperate with each other.

Humans do not need to manage all "things," and "things" can autonomously manage their own lifetime (life) and keeping of condition (health). This can relieve humans of the burden of management of "things" and provide new benefits including appropriate keeping of condition and maintenance for "things" and offering of next users and applications suited to life stages of users.

The autonomous thinking characteristics include some thinking factors (goals) shared by many things such as "longevity and survival" and "health and keeping of condition" representing virtual wills of "things" such that those thinking factors are implemented as shared software. This eliminates the need to individually develop or implement software for each "thing."

In human society, humans having their wills cooperate with each other to achieve what they cannot do individually or create new values. Similarly, in the cyber-physical system 100 according to Embodiment 1, "things" represented as the "virtual will model" software can build the cooperation relationship on the cyber space to create new values which could not be created before.

With the foregoing, many "things" can be used appropriately for as long a time as possible to contribute to the economy and society supporting the protection of earth resources instead of conventional mass consumption and mass disposal.

Particularly, the system according to Embodiment 1 is different from the known CPS technique in the significant advantage in which the concept of the "virtual will model" puts "things," humans, services and the like on the same ground in the cyber space and virtualizes them such that they can be treated in the same manner.

Description is now made of an example of the autonomous operation of the virtual thinking model using the cyber-physical system 100 according to Embodiment 1.

### (Example 1)

To provide a longer life of facility equipment (to keep healthy on its own), "facility equipment" is set for a "thing" corresponding to a thinking model (hereinafter referred to as a thinking model "facility equipment") and modeled on the cyber space to determine the autonomous thinking characteristic. Since the thinking model "facility equipment" is deteriorated in condition and performance over time, it self-diagnoses whether maintenance is required (execution of situation determination processing based on physical data). In response to determination that maintenance is required, the thinking model "facility equipment" selects the action of mutual cooperation type to evaluate the cooperation details (maintenance details) of a cooperative partner which can offer a maintenance service. The thinking model "facility equipment" performs mutual communication processing (which may include transaction processing before contract conclusion) with a cooperative partner presenting the cooperation details and determines, as an execution action, a candidate action which can be performed by the cooperative partner engaged in the mutual communication processing (the cooperative partner which has concluded a transaction contract with the thinking model "facility equipment") . Specifically, the thinking model "facility equipment" orders maintenance operation from the cooperative partner. Then, the status information of the thinking model "facility equipment" is updated upon execution of the maintenance operation (execution of the action) . The thinking model "facility equipment" can perform the virtual thinking processing of mutual cooperation type to achieve a longer life of the facility equipment (keep healthy on its own).

For the cooperative partner which offers the maintenance service, a "facility maintenance service" is modeled on the cyber space as a "service" corresponding to the thinking model (hereinafter referred to as a thinking model "facility maintenance service") to determine the autonomous thinking characteristic. The thinking model "facility maintenance service" determines service availability including service details through situation determination processing. In response to determination that the service can be offered, the thinking model "facility maintenance service" selects the action of independent execution type to select a candidate action of offering the facility maintenance service. Specifically, the thinking model "facility maintenance service" creates a candidate action (third candidate action) belonging to the action of mutual cooperation type including cooperation details which can be provided for another thinking model, and performs the action of allowing the created third candidate action to be presented to another thinking model. The thinking model "facility maintenance service" performs the virtual thinking processing of independent execution type to offer the facility maintenance service. In response to reception of the order from the thinking model "facility equipment" through mutual communication processing, the thinking model "facility maintenance service" executes the action of offering the ordered facility maintenance service for the thinking model "facility equipment."

### (Example 2)

A mobile body responsible for logistics is modeled on the cyber space as a "thing" corresponding to a thinking model. For example, a thinking model "freight vehicle" and a thinking model "drone" are modeled and their respective autonomous thinking characteristics are determined. The drone herein refers to an unmanned air vehicle for transporting loads.

The thinking model "freight vehicle" includes drone transport equipment on its roof where drones can land, and determines the availability of roof space through situation determination processing. In response to determination that the roof space is available, the thinking model "freight vehicle" determines that it can cooperate in drone transport in terms of the autonomous thinking characteristic "usefulness," and selects the action of independent execution type. The thinking model "freight vehicle" selects a candidate action of cooperating in drone transport and creates a candidate action (third candidate action) belonging to the action of mutual cooperation type including cooperation details which can be provided for another thinking model. For example, the thinking model "freight vehicle" creates a third candidate action including the cooperation details which represent the availability of drone transport equipment in a zone of a route A. The thinking model "freight vehicle" executes the action of allowing the created third candidate action to be presented to another thinking model. In this manner, the thinking model "freight vehicle" performs the virtual thinking processing of independent execution type to offer the transport service using the drone transport equipment on the roof.

The thinking model "drone" self-diagnoses the remaining capacity and the degree of degradation of the battery based on physical data (situation determination processing). When the remaining capacity is low and the degree of degradation is above a defined value, the thinking model "drone" determines that the drone needs to be transported by another mobile body in order to reduce battery consumption in terms of the autonomous thinking characteristic "longevity." The thinking model "drone" selects the action of mutual cooperation type to evaluate the cooperation details of a cooperative partner which can offer the drone transport service. For example, the thinking model "drone" can perform evaluation processing of matching the moving route of the thinking model "drone" with the transportable route provided by the cooperative partner.

The thinking model "drone" performs mutual communication processing (which may include transaction processing before contract conclusion) with a cooperative partner presenting the cooperation details (the thinking model "freight vehicle") and determines, as an execution action, a candidate action corresponding to the cooperative partner engaged in the mutual communication processing (the cooperative partner which has concluded a transaction contract with the thinking model "drone"). Specifically, the thinking model "drone" orders drone transport from the thinking model "freight vehicle." Then, the status information of the thinking model "drone" is updated upon reception of the drone transport service (execution of the action) . The thinking model "drone" can perform the virtual thinking processing of mutual cooperation type to achieve a longer life of the drone and reduction and optimization of energy consumption.

### (Embodiment 2)

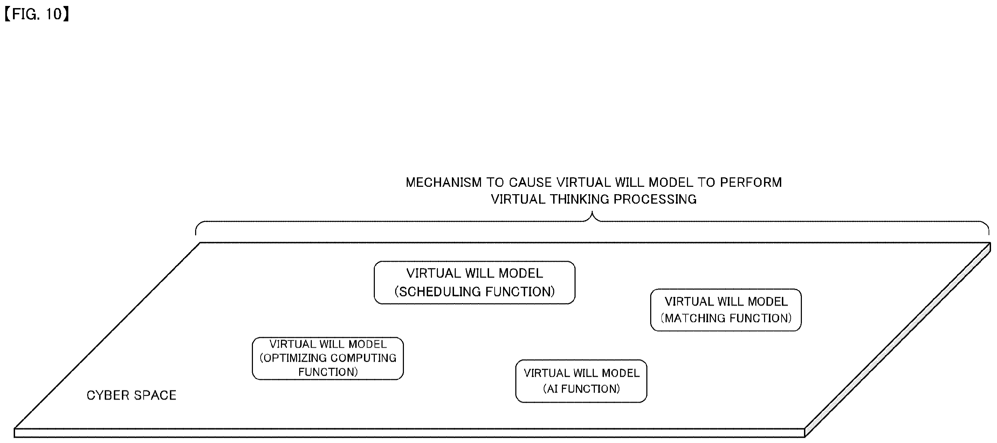

Figures 10 to 13 are diagrams for explaining Embodiment 2.

Embodiment 1 described above provides the mechanism to allow real-world "things" to have their own wills virtually on the cyber space and operate autonomously. The present invention can provide, on the cyber space, virtual will models which require no link to real-world "things." Figure 10 is a conceptual diagram showing a computer system 300 according to Embodiment 2.

The concept of the unlinked thinking model has been described in Embodiment 1. As shown in Fig. 10, the unlinked thinking model can also be built as a virtual will model with no link to any real-world "thing" such that multiple unlinked thinking models are associated with each other and operate autonomously on the cyber space.

By way of example, to offer a software service using only software (program module), one or more functions constituting the software service can be modeled as the virtual thinking model on the cyber space. For example, the thinking model includes an agent function of intermediating between functional modules, a matching function of matching with another functional module (cooperative partners), a scheduling function of promoting execution of an action at an appropriate period and time zone for functional modules, an optimizing computing function of optimizing computer resources and action execution, and an AI function for functional modules.

In a different viewpoint, energy and computing time necessary for computer processing contribute to energy consumption relating to the global environment, and keeping and using them in the same condition over a long time may be a cause of hindering reduction and optimization of energy consumption. The issue of reduction of resource consumption to protect the global environment can be addressed by computer processing not linked to the real world, that is, by operating software (program module) not linked to the real world in the same mechanism as the virtual will models of "things" according to Embodiment 1.

Embodiment 2 thus provides a mechanism of virtual will models autonomously operating on the cyber space.

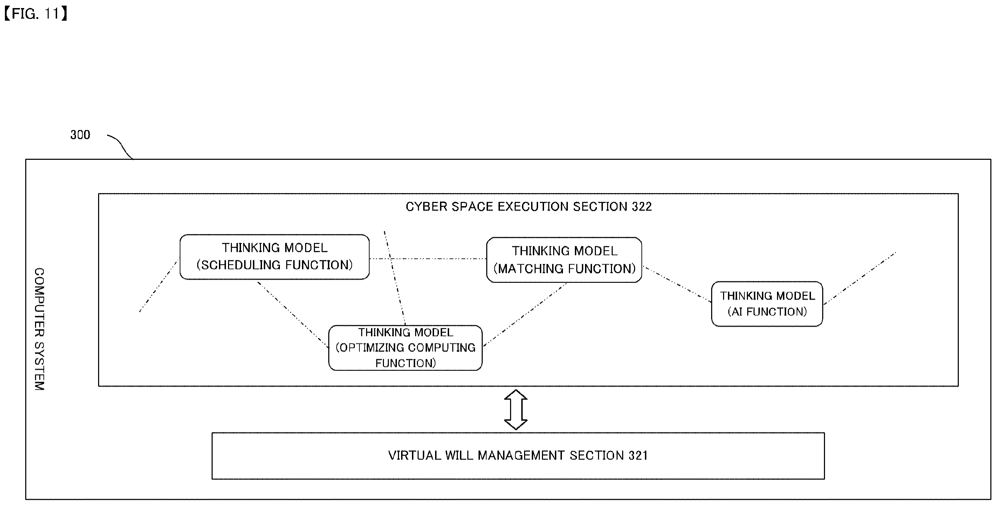

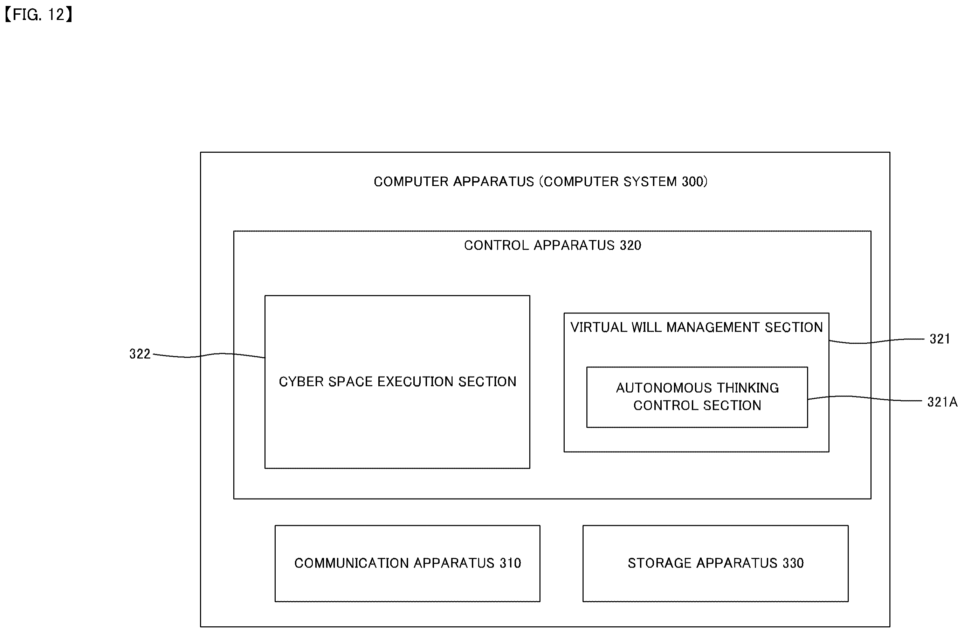

Figure 11 is a diagram showing the system configuration of the computer system 300 according to Embodiment 2. Figure 12 is a diagram showing functional blocks of the computer system 300 according to Embodiment 2.

The computer system 300 comprises a communication apparatus 310, a control apparatus 320, and a storage apparatus 330. The control apparatus 320 includes a virtual will management section 321, an autonomous thinking control section 321A, and a cyber space execution section 322.

The virtual will management section 321 corresponds to the virtual will management section 122 of Embodiment 1 and models, on the cyber space, a thinking model which performs virtual thinking processing with no link to the real world. The autonomous thinking control section 321A corresponds to the autonomous thinking control section 122A of Embodiment 1 and determines autonomous thinking characteristics of thinking models based on predetermined thinking factors. The configurations of the thinking factors and the autonomous thinking characteristics are identical to those in Embodiment 1.

The cyber space execution section 322 causes each of the thinking models to perform virtual thinking processing based on the autonomous thinking characteristics. The cyber space execution section 322 corresponds to the cyber space execution section 123 of Embodiment 1 and causes the thinking models to perform virtual thinking processing (the virtual thinking processing of independent execution type, the virtual thinking processing of mutual cooperation type) based on the autonomous thinking characteristics described in Embodiment 1 such that the thinking models operate as virtual will models on the cyber space.

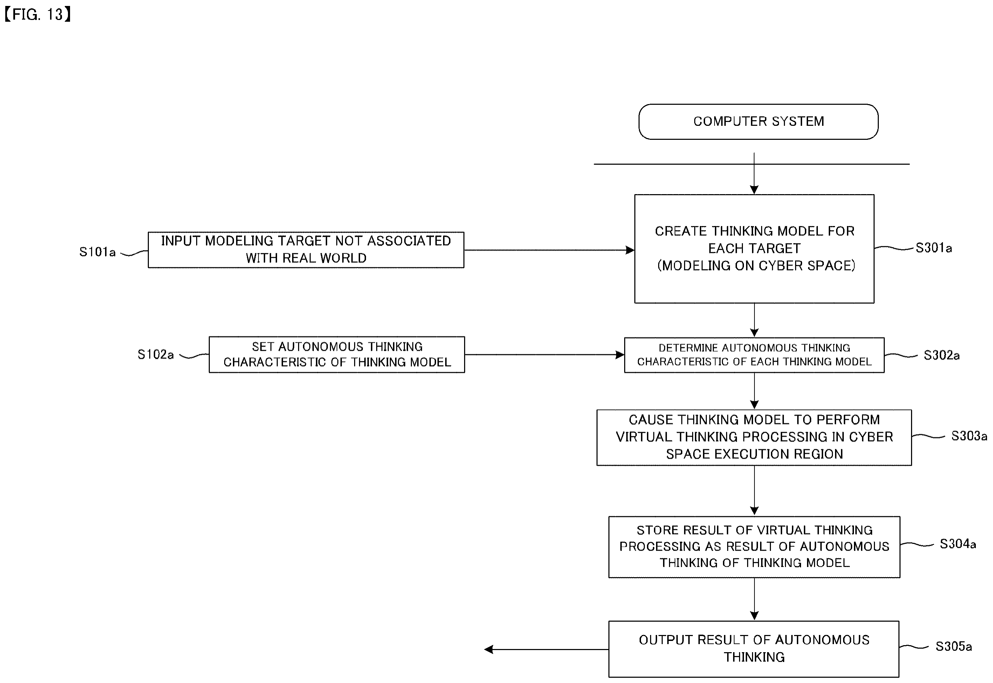

Figure 13 is a diagram showing a flow of processing in the computer system 300 according to Embodiment 2. A modeling target is input from a predetermined terminal to the computer system 300 (S101a). The modeling target includes only targets not associated with any real-world "things."

The virtual will management section 321 creates a thinking model corresponding to the input modeling target (S301a). The autonomous thinking control section 321A performs control to allow setting of one or more different thinking factors constituting an autonomous thinking characteristic and sets the thinking factor for the created thinking model (S102a). The autonomous thinking control section 321A determines the autonomous thinking characteristic of the created thinking model based on the set thinking factor (S302a). The determined autonomous thinking characteristic is applied to the associated thinking model.

The cyber space execution section 322 of the computer system 300 causes each thinking model to operate in the cyber space execution region and perform virtual thinking processing based on the autonomous thinking characteristic (S303a). The computer system 300 stores the result of the virtual thinking processing performed on the cyber space by each thinking model into the storage apparatus 130 (S304a). The computer system 300 outputs the result of the virtual thinking processing as required (S305a).

While the exemplary embodiments have been described, the functions constituting the cyber-physical system and the computer system can be implemented by a program. A computer program previously provided for implementing the functions can be stored on an auxiliary storage apparatus, the program stored on the auxiliary storage apparatus can be read by a control section such as a CPU to a main storage apparatus, and the program read to the main storage apparatus can be executed by the control section to provide the functions of the respective components.

The program may be recorded on a computer readable recording medium and provided for the computer. Examples of the computer readable recording medium include optical disks such as CD-ROMs and rewritable Blue-ray^{®} Disks, phase-change optical disks such as DVD-ROMs, magneto-optical disks such as Magnet-Optical (MO) disks, magnetic disks such as floppy disks^{®} and hard disks, and memory cards such as SD memory cards and USB flash drives. Hardware apparatuses such as integrated circuits (including IC chips for ROM or RAM) designed and configured specifically for the purpose of the present invention are also included in the recording medium.

The present invention including the above program is not limited to implementation on architecture of von Neumann computer, but may be implemented on architecture of non-von Neumann computer such as a neurocomputer based on the mechanism of cranial nerve circuits or a quantum computer based on quantum mechanics applied to information processing.

While the exemplary embodiments of the present invention have been described above, the embodiments are only illustrative and are not intended to limit the scope of the present invention. The novel embodiments can be implemented in various other forms, and various omissions, substitutions, and modifications can be made thereto without departing from the spirit or scope of the present invention. These embodiments and variations are encompassed within the spirit or scope of the present invention and within the invention set forth in the claims and the equivalents thereof.

### DESCRIPTION OF THE REFERENCE NUMERALS

- 100: CYBER-PHYSICAL SYSTEM
- 110: COMMUNICATION APPARATUS
- 120: CONTROL APPARATUS
- 121: PHYSICAL DATA INTERFACE SECTION
- 122: VIRTUAL WILL MANAGEMENT SECTION
- 122A: AUTONOMOUS THINKING CONTROL SECTION
- 123: CYBER SPACE EXECUTION SECTION
- 124: CYBER DATA INTERFACE SECTION
- 130: STORAGE APPARATUS
- 200: VIRTUAL WILL MODULE
- 201: OWN SITUATION DETERMINATION FUNCTION
- 202: ACTION SELECTION FUNCTION
- 203: ACTION LIST
- 204: ACTION EXECUTION FUNCTION
- 210: MUTUAL COOPERATION FUNCTION
- 211: COOPERATION DETAILS EVALUATION FUNCTION
- 212: MUTUAL COMMUNICATION FUNCTION
- 300: COMPUTER SYSTEM
- 310: COMMUNICATION APPARATUS
- 320: CONTROL APPARATUS
- 321: VIRTUAL WILL MANAGEMENT SECTION
- 321A: AUTONOMOUS THINKING CONTROL SECTION
- 322: CYBER SPACE EXECUTION SECTION
- 330: STORAGE APPARATUS

## Claims

1. A cyber-physical system comprising:
a virtual will management section configured to model at least one thinking model corresponding to a real-world thing on cyber space and to determine an autonomous thinking characteristic of the thinking model based on predetermined thinking factors;
a physical data interface section configured to provide collected physical data for the cyber space;
a cyber space execution section configured to cause the thinking model to perform virtual thinking processing based on the autonomous thinking characteristic; and
a cyber data interface section configured to output a result of autonomous thinking of the thinking model in the virtual thinking processing or information based on the result of autonomous thinking.

2. The cyber-physical system according to claim 1, wherein the cyber space execution section is configured to cause the thinking model to perform:
virtual thinking processing of independent execution type including performing situation determination processing based on the physical data, determining, based on the autonomous thinking characteristic, whether a result of the situation determination processing shows need of an action of independent execution type to be executed by the thinking model or an action of mutual cooperation type requiring cooperation of another thinking model, and in response to selection of the action of independent execution type, selecting a candidate action based on the autonomous thinking characteristic from candidate actions belonging to the action of independent execution type included in an action list, the selected candidate action matching the result of the situation determination processing, and determining the selected candidate action as an execution action.

3. The cyber-physical system according to claim 1 or 2, wherein the cyber space execution section is configured to cause the thinking model to perform:
virtual thinking processing of mutual cooperation type including performing situation determination processing based on the physical data, determining, based on the autonomous thinking characteristic, whether a result of the situation determination processing shows need of an action of independent execution type to be executed by the thinking model or an action of mutual cooperation type requiring cooperation of another thinking model, and in response to selection of the action of mutual cooperation type, evaluating cooperation details presented by another thinking model based on the autonomous thinking characteristic, and determining an action of mutual cooperation type based on the cooperation details as an execution action.

4. The cyber-physical system according to claim 3, wherein the thinking model holds an action list including at least one candidate action belonging to the action of independent execution type and at least one candidate action belonging to the action of mutual cooperation type, and
the virtual thinking processing of mutual cooperation type is configured to include:
evaluation processing of evaluating cooperation details of the candidate action belonging to the action of mutual cooperation type based on the autonomous thinking characteristic;
mutual communication processing for creating an agreement with a cooperative partner relating to a result of the evaluation processing based on a transaction condition held by each of the thinking models; and
determination of the candidate action corresponding to the cooperative partner in the mutual communication processing as an execution action.

5. The cyber-physical system according to claim 4, wherein the action list includes a first candidate action belonging to the action of independent execution type, a second candidate action belonging to the action of mutual cooperation type including cooperation details presented by another thinking model, and a third candidate action belonging to the action of mutual cooperation type, including cooperation details that can be provided from oneself to another thinking model modeled in the cyber space, and
the cyber space execution section is configured to perform candidate action providing processing of providing the third candidate action held in the action list of the thinking model for the other thinking model.

6. The cyber-physical system according to claim 3, wherein the cyber space execution section is configured to perform candidate action providing processing of collecting a candidate action held by the thinking model and belonging to the action of mutual cooperation type including cooperation details that can be provided from oneself to another thinking model modeled in the cyber space, holding the collected candidate action in a predetermined storage region, and providing the candidate action belonging to the action of mutual cooperation type for the other thinking model, and
the virtual thinking processing of mutual cooperation type is configured to include:
evaluation processing of evaluating the cooperation details of the candidate action stored in the storage region based on the autonomous thinking characteristic;
mutual communication processing for creating an agreement with a cooperative partner relating to a result of the evaluation processing based on a transaction condition held by each of the thinking models; and
determination of the candidate action corresponding to the cooperative partner in the mutual communication processing as an execution action.

7. The cyber-physical system according to claim 3, wherein the virtual thinking processing of mutual cooperation type is configured to include:
interaction processing including processing of inquiring of another thinking model and answer processing of outputting a candidate action belonging to the action of mutual cooperation type including cooperation details in response to an inquiry from another thinking model;
evaluation processing of evaluating cooperation details acquired through the interaction processing based on the autonomous thinking characteristic;
mutual communication processing for creating an agreement with a cooperative partner resulting to a result of the evaluation processing based on a transaction condition held by each of the thinking models; and
determination of the candidate action corresponding to the cooperative partner in the mutual communication processing as an execution action.

8. The cyber-physical system according to claim 1, wherein the virtual will management section includes an autonomous thinking control section configured to determine the autonomous thinking characteristic of the thinking model based on one of or a combination of some of the thinking factors, and
the autonomous thinking control section is configured to perform control to allow setting of one of or a combination of some of the thinking factors, and to allow determination of the autonomous thinking characteristic of the thinking model.

9. The cyber-physical system according to claim 1, wherein the virtual will management section includes an autonomous thinking control section configured to determine the autonomous thinking characteristic of the thinking model based on one of or a combination of some of the thinking factors, and
the autonomous thinking control section is configured to perform control to allow setting of weight values for different ones of the thinking factors, and to determine the autonomous thinking characteristic based on one of or a combination of some of the thinking factors using the set weigh values.

10. The cyber-physical system according to claim 8 or 9, wherein the autonomous thinking control section is configured to change one of or a combination of some of the thinking factors depending on the physical data or a result of situation determination processing based on the physical data.

11. The cyber-physical system according to claim 1, wherein the thinking factors include a first thinking factor responsible for survival and longevity, a second thinking factor responsible for live and life, a third thinking factor responsible for health and good condition, a fourth thinking factor responsible for beauty and best work, and a fifth thinking factor responsible for usefulness.

12. The cyber-physical system according to claim 1, wherein the virtual will management section is configured to model, on the cyber space, a thinking model corresponding to a real-world service offered for a real-world thing, and to determine the autonomous thinking characteristic of the thinking model corresponding to the service based on predetermined thinking factors, and
the cyber space execution section is configured to cause each of the thinking model corresponding to thing and the thinking model corresponding to service to perform the virtual thinking processing.

13. The cyber-physical system according to claim 1, wherein and the virtual will management section is configured to model a plurality of thinking models corresponding to different real-world things on the cyber space and to determine the autonomous thinking characteristics of the respective thinking models.

14. The cyber-physical system according to claim 1, wherein the thing corresponding to the thinking model is at least one of a facility, a machine, an apparatus, a product, or a mobile body operating in the real world.

15. The cyber-physical system according to claim 1, wherein the virtual will management section is configured to model a thinking model of unlinked type on the cyber space, the thinking model of unlinked type having interrelation with the thinking model corresponding the real-world thing and performing the virtual thinking processing with no link to the real world.

16. A program comprising instructions, wherein the instructions, when executed by a computer, cause the computer to provide:
a first function of modeling at least one thinking model corresponding to a real-world thing on cyber space and determining an autonomous thinking characteristic of the thinking model based on predetermined thinking factors;
a second function of providing collected physical data for the cyber space;
a third function of causing the thinking model to perform virtual thinking processing based on the autonomous thinking characteristic; and
a fourth function of outputting a result of autonomous thinking of the thinking model in the virtual thinking processing or information based on the result of autonomous thinking.

17. A computer system comprising:
a virtual will management section configured to model at least one thinking model on cyber space and to determine an autonomous thinking characteristic of the thinking model based on predetermined thinking factors; and
a cyber space execution section configured to cause the thinking model to perform virtual thinking processing based on the autonomous thinking characteristic.

18. The cyber-physical system according to claim 1, wherein the virtual will management section is configured to model a thinking model corresponding to a real-world service on the cyber space and to determine an autonomous thinking characteristic of the thinking model based on predetermined thinking factors.

19. The cyber-physical system according to claim 1, wherein the virtual will management section is configured to model a thinking model corresponding to a human or an organization offering a real-world service on the cyber space and to determine an autonomous thinking characteristic of the thinking model based on predetermined thinking factors.

20. The cyber-physical system according to claim 1, wherein the virtual will management section is configured to model a thinking model not linked to a real-world thing on the cyber space and to determine an autonomous thinking characteristic of the thinking model based on predetermined thinking factors.
